Europäisches Patentamt

European Patent Office

Office européen des brevets

(19)

(11) Veröffentlichungsnummer: **0 024 554**
**B1**

(12) # EUROPÄISCHE PATENTSCHRIFT

(45) Veröffentlichungstag der Patentschrift:
**09.02.83**

(51) Int. Cl.³: **B 61 D 17/00,** B 61 D 17/02

(21) Anmeldenummer: **80104403.3**

(22) Anmeldetag: **26.07.80**

(54) **Schienenfahrzeug.**

(30) Priorität: **15.08.79 CH 7459/79**

(43) Veröffentlichungstag der Anmeldung:
**11.03.81 Patentblatt 81/10**

(45) Bekanntmachung des Hinweises auf die Patenterteilung:
**09.02.83 Patentblatt 83/6**

(84) Benannte Vertragsstaaten:
**CH DE FR GB IT LI**

(56) Entgegenhaltungen:
**DE-A-2 256 764**
**DE-C-147 883**
**DE-C-274 583**
**US-A-2 118 127**
**US-A-2 864 318**
**US-A-2 976 820**
**US-A-4 165 846**

(73) Patentinhaber: **Jaus, Rudolf, Grüneggstrasse 12,
CH-6005 Luzern (CH)**

(72) Erfinder: **Jaus, Rudolf, Grüneggstrasse 12,
CH-6005 Luzern (CH)**

(74) Vertreter: **Troesch, Hans Alfred, Dr. Ing. et al,
Walchestrasse 19, CH-8035 Zürich (CH)**

EP 0 024 554 B1

## Schienenfahrzeug

Die vorliegende Erfindung betrifft ein Schienenfahrzeug mit Wagenoberbau, der Seitenwände aufweist, insbesondere mit Wagenkasten, mit mindestens einem seitlich am Schienenfahrzeug schwenkbaren Leitkörper in Form eines im wesentlichen quer zur Fahrtrichtung drehbaren, z. B. profilierten, Teils, welcher Teil eine wagenkastennahe ebene oder gebogene Seitenbegrenzung aufweist.

Aus der US-PS 2 118 127 ist bekanntgeworden, zur Stabilisierung von Eisenbahnzügen profilierte Flügel vorzusehen. Diese gestatten je nach Lage eine Kraft senkrecht zur Bewegungsrichtung des Zuges nach unten, also gewichtsvergrößernd, oder nach oben zu erzeugen. Auch ist dort vorgesehen, die Wagenbewegung in Kurven durch entsprechende Verstellung der Flügel stabilisierend zu unterstützen.

Diese Profile sind nicht nur dem Fartwind, sondern auch jeglichen Seitenwinden und Sturmböen, ausgesetzt sowie Wirbeln und anderen atmosphärischen Einflüssen wie Regen, Hagel u. dgl. Diese Erscheinungen beeinflussen aber die an den Flügeln entstehenden Kräfte gegebenenfalls wesentlich. In dieser Beziehung befriedigt daher die dem Stande der Technik angehörende Lösung nicht.

Die vorliegende Erfindung dient dazu, die durch den Fahrtwind bei hohen Geschwindigkeiten recht beträchtlichen Energieverluste durch Wirbelbildung und andere Wettereinflüsse, insbesondere im Raum des Wagendrehgestells, zu verringern.

Diese Aufgabe löst das erfindungsgemäße Schienenfahrzeug, welches sich dadurch auszeichnet, daß die Leitkörper in einem unten im wesentlichen ganz und seitlich vorzugsweise teilweise offenen Leitkanal angeordnet sind.

Die Erfindung wird anschließend beispielsweise anhand einer rein schematischen Zeichnung erläutert. Es zeigt

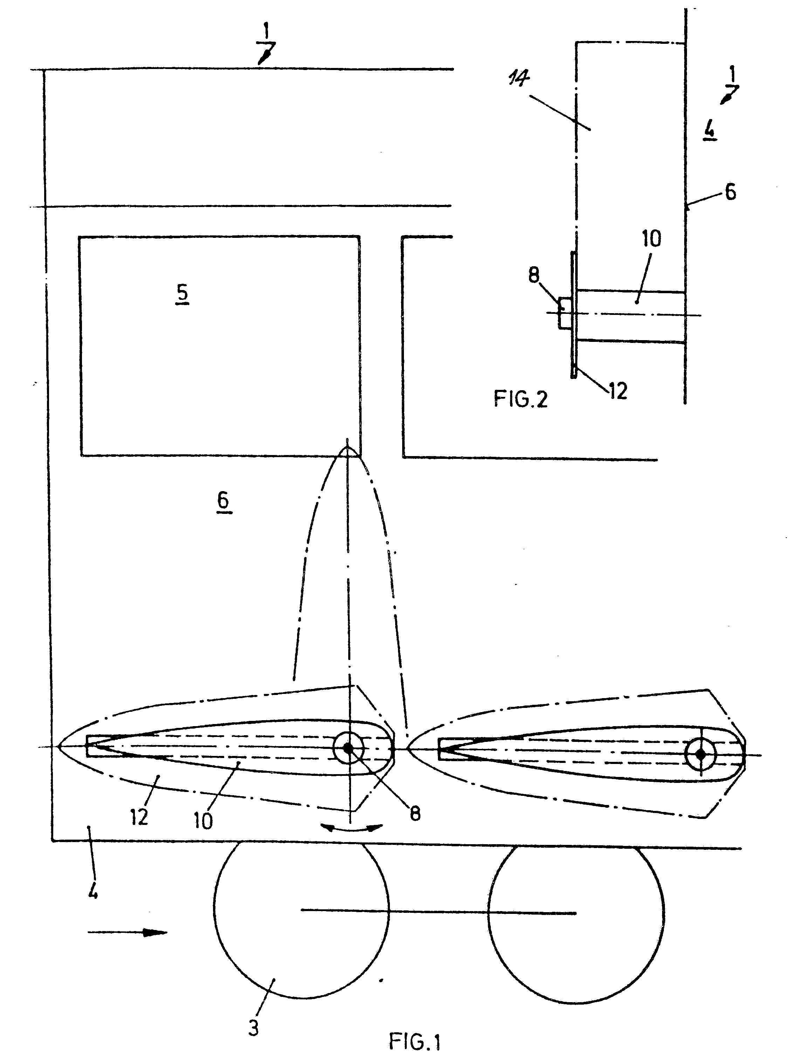

Fig. 1 einen Ausschnitt aus einer Seitenansicht eines Personeneisenbahnwagens,

Fig. 2 einen Ausschnitt auf eine erfindungsgemäße Leitanlage, in Fahrtrichtung.

An einem Teil eines Schienenfahrzeuges 1 sind zwei Räder 3 ersichtlich sowie ein Teil eines Wagenkastens 4 mit Fenstern 5 und einer der Kastenseitenwände 6. Unten an den Seitenwänden 6 sind auf Schwenkzapfen 8 Profilteile 10 befestigt, welche gegen die Seitenwand 6 hin mit einem seitlichen Führungsabschluß 12 ausgerüstet sind. Diese schwenkbaren Teile 10 können von einem Kanal mit einer Kanaldecke und mit einer ausgerüsteten Außenseitenwand umgeben sein. Gruppen von Schwenkzapfen 8 sind mit ihren Profilteilen 10 und den Führungsabschlüssen 12 jeweils durch, z. B. zentral bedienbare, Verbindungsgestänge (nicht dargestellt) verbunden. Die Profilteile sind vorzugsweise Tragflügelprofile, insbesondere symmetrische.

Durch entsprechendes Anstellen der Profilteile 10 können diese geneigt werden, wodurch ein mehr oder weniger großer, dem Schienenfahrzeuggewicht entgegenwirkender Auftrieb entsteht. Es kann entsprechend der Polarkurve des Profils und der Anströmrichtung auch ein unterstützender Abtrieb erreicht werden, was sich auf die Radreibungsverluste hauptsächlich positiv auswirkt bzw. auf die Belastung beim Überfahren von Weichen u. dgl. Durch entsprechendes Anstellen des Profilteils 10 kann die Entlastung des Schienenfahrzeuges örtlich geändert werden. Dies kann sich bei großen Geschwindigkeiten und Überfahren von Weichen und Kreuzungen sowie beim Befahren von Kurven als zweckmäßig erweisen. Durch diese Profilierung ist es möglich, die Strömungsverhältnisse, insbesondere im unteren Teil des Wagenkastens 4 und des Wagenunterbaues, schlag- und reibungsvermindernd zu beeinflussen, was sich auf den Energieverbrauch bei der Traktion positiv auswirkt. So ist es möglich, durch entsprechende Profilierung und Einstellung der Profilteile 10 im unteren Teil des Wagenkastens einen Sog und damit unter dem Wagenkasten selbst eine wirbelenergieärmere Zone zu erwirken.

Die Steuerung der Profile kann vom Führerstand aus erfolgen. Dies ist direkt mittels gestängetreibender Motoren möglich oder kann durch eine zentral-hydraulische Anlage bewirkt werden. Diese Teile bilden aber bekannte Fachkenntnisse, welche nicht zur vorliegenden Erfindung gehören, weshalb sie auch nicht im einzelnen beschrieben sind.

## Patentanspruch

Schienenfahrzeug mit Wagenoberbau, der Seitenwände aufweist, insbesondere mit Wagenkasten, mit mindestens einem seitlich am Schienenfahrzeug (1) schwenkbaren Leitkörper (10, 12) in Form eines im wesentlichen quer zur Fahrtrichtung drehbaren, z. B. profilierten, Teils (10), welcher Teil (10) eine wagenkastennahe (4) ebene oder gebogene Seitenbegrenzung (12) aufweist, dadurch gekennzeichnet, daß die Leitkörper (10, 12) in einem unten im wesentlichen ganz und seitlich vorzugsweise teilweise offenen Leitkanal (14) angeordnet sind.

## Claim

Rail vehicle having a superstructure with side walls, in particular having a wagon box, with at least one control body (10, 12) pivotable on the side of the rail vehicle (1) in the form of, for example, a profiled part (10), which may be turned essentially transversely to the direction of travel which part (1) has a flat or bent side boundary (12) adjacent to the wagon box (4), characterised in that the control bodies (10, 12) are arranged in a control duct (14), which is essentially open at the bottom and preferably partially open at the sides.

## Revendication

Véhicule ferroviaire avec partie supérieure comportant des parois latérales, notemment avec caisse de wagon, avec au moins un corps directeur (10, 12) monté à pivotement latéralement sur le véhicule ferroviaire (1), ce corps directeur ayant la forme d'une pièce (10), par exemple profilée, pouvant être tournée essentiellement en direction transversale à la direction de progression, cette pièce (10) ayant à proximité de la caisse du wagon (4) une limite latérale (12) plate ou courbe, caractérisé en ce que le corps directeur (10, 12) est disposé dans un canal directeur (14) ouvert en bas essentiellement en entier et latéralement de préférence en partie.

1

5

6

FIG.1

3

4

12 10 8

14

1

4

6

10

8

12

FIG.2